# EUROPEAN PATENT APPLICATION

(11) **EP 1 758 400 A2**
(43) Date of publication of application: **28.02.2007**
(21) Application number: 06017761.5
(22) Date of filing: 25.08.2006
(51) Int. Cl.: H04N 7/24, H04N 5/44

(54) **Mobile communication terminal and method for reproducing digital broadcasting**

(30) Priority: 25.08.2005 KR 20050078361; 18.08.2006 KR 20060078330
(71) Applicant: Samsung Electronics Co., Ltd., Yeongtong-gu Suwon-si, Gyeonggi-do (KR)
(72) Inventor: Kwon, Seong-Geun, Yeongtong-gu Suwon-si Gyeonggi-do (KR); Lee, Jong-Kerl, Yeongtong-gu Suwon-si Gyeonggi-do (KR)
(74) Representative: Lang, Johannes

(57) **Abstract**

Disclosed is a mobile communication terminal and a method for reproducing digital broadcasting by a mobile communication terminal equipped with a moving picture player, the method including receiving digital broadcasting data, detecting CODEC information necessary for reproduction of the digital broadcasting, while parsing the received digital broadcasting data into video and audio data, setting the detected CODEC information in the moving picture player, and reproducing the video and audio data by the moving picture player in which the CODEC information has been set. The mobile communication terminal can reproduce digital broadcasting without a separate multimedia chip, thereby reducing the power consumption of the terminal.

## Description

### BACKGROUND OF THE INVENTION

### 1. Field of the Invention

The present invention relates generally to digital broadcasting, and more particularly to a mobile communication terminal and a method for reproducing digital broadcasting by using a moving picture player.

### 2. Description of the Related Art

In general, digital broadcasting refers to a high class broadcasting service that provides a higher quality screen and sound over that of the conventional analog broadcasting.

With the recent development in digital broadcasting and mobile communication technologies, extensive research is being conducted on providing a digital broadcasting service which allows users to view digital broadcasting even when in motion. Particular research is being conducted on the Digital Multimedia Broadcasting (DMB) service using mobile communication terminals. DMB refers to a broadcasting service which allows a user to view various multimedia broadcasts through multiple channels even when in motion by using a personal portable receiver or an automobile-installed receiver equipped with a non-directional antenna.

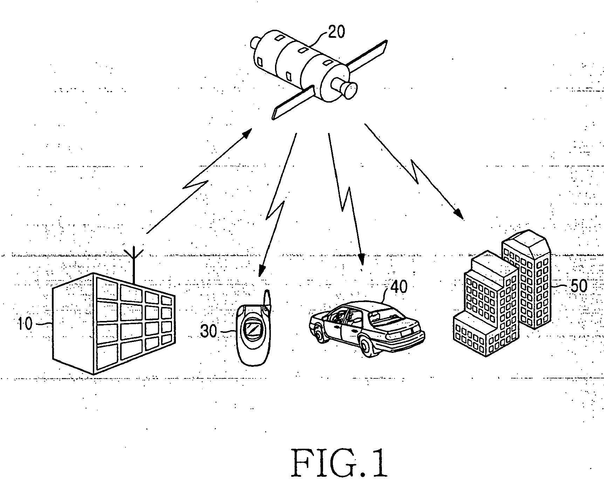

FIG. 1 is a view illustrating a conventional system for providing a digital broadcasting service.

Referring to FIG. 1, the system includes a data transmission center 10, a satellite 20 and receivers including, for example, a mobile communication terminal 30, an automobile receiver 40 and a home receiver 50.

The data transmission center 10 compresses and modulates digital multimedia broadcasting data such as image, voice and data signals, and then transmits the modulated data to the satellite 20.

The satellite 20 receives, amplifies and frequency-converts the signals transmitted from the data transmission center 10, and then transmits the signals back to the ground.

The receivers 30, 40 and 50 receive the signals transmitted back from the satellite 20, demodulate and de-compress the received signals into original signals, and then output the restored original signals.

Due to the rapid development in digital broadcasting service technology as described above, users can now view clear digital broadcasting without noise even while within a vehicle moving at a high rate of speed.

Meanwhile, in order to implement the digital broadcasting receiving function, conventional mobile communication terminals require a separate multimedia chip in addition to a communication modem chip, such as a mobile station modem (MSM), to control the mobile communication function. In a mobile communication terminal equipped with the multimedia chip, the communication modem chip performs the mobile communication function in the manner of a telephone, and the multimedia chip performs the digital broadcasting receiving function.

However, use of the multimedia chip increases power consumption, and the addition of the multimedia chip within a mobile communication terminal creates a limit in the design of the mobile communication terminal.

### SUMMARY OF THE INVENTION

Accordingly, the present invention has been made to solve the above-mentioned problems occurring in the prior art, and an object of the present invention is to provide a mobile communication terminal and a method for reproducing digital broadcasting without a multimedia chip.

It is another object of the present invention to provide a mobile communication terminal and a method for reproducing digital broadcasting by using a moving picture player.

In order to accomplish these objects, there is provided a first embodiment of a method for reproducing digital broadcasting by a mobile communication terminal equipped with a moving picture player, the method including receiving digital broadcasting data, detecting coder/decoder (CODEC) information necessary for reproduction of the digital broadcasting, while parsing the received digital broadcasting data into video and audio data, setting the detected CODEC information in the moving picture player, and reproducing the video and the audio data by the moving picture player in which the CODEC information has been set.

In accordance with the present invention, there is provided a second embodiment of a method for reproducing digital broadcasting by a mobile communication terminal equipped with a moving picture player, the method including receiving digital broadcasting data in response to a request for reproduction of the digital broadcasting, detecting CODEC information necessary for reproduction of the digital broadcasting, while parsing the received digital broadcasting data into video and audio data, converting the detected CODEC information into session description protocol (SDP) formatted information and setting the converted information in the moving picture player, and reproducing the parsed video and audio data by the moving picture player in which the CODEC information has been set.

In accordance with the present invention, there is provided a first embodiment of a mobile communication terminal equipped with a moving picture player, the mobile communication terminal including a digital broadcasting receiver for receiving digital broadcasting data, a demodulator for demodulating the received digital broadcasting data, a control unit which detects CODEC information necessary for reproduction of the digital broadcasting, while parsing the demodulated digital broadcasting data into video and audio data, sets the detected CODEC information in the moving picture player, and controls the moving picture player to reproduce the video , and the audio data.

In accordance with the present invention, there is provided a second embodiment of a mobile communication terminal equipped with a moving picture player, the mobile communication terminal including a digital broadcasting receiver for receiving digital broadcasting data, a demodulator for demodulating the received digital broadcasting data, a control unit which detects CODEC information necessary for reproduction of the digital broadcasting while parsing the demodulated digital broadcasting data into video and audio data, converts the CODEC information into Session Description Protocol (SDP) formatted information , sets the converted information in the moving picture player, and controls the moving picture player to reproduce the video and the audio data, and a Real-Time Protocol (RTP) parser for transmitting the video and the audio data to the moving picture player according to a real-time protocol scheme.

### BRIEF DESCRIPTION OF THE DRAWINGS

The above and other objects, features and advantages of the present invention will be more apparent from the following detailed description taken in conjunction with the accompanying drawings, in which:
FIG. 1 is a view illustrating a conventional system for providing a digital broadcasting service;
FIG. 2 is a block diagram of a mobile communication terminal according to a first embodiment of the present invention;
FIG. 3 is a flowchart for illustrating an operation process of the mobile communication terminal according to the first embodiment of the present invention;
FIG. 4 is a block diagram of a mobile communication terminal according to a second embodiment of the present invention; and
FIG. 5 is a flowchart for illustrating an operation process of the mobile communication terminal according to the second embodiment of the present invention.

### DETAILED DESCRIPTION OF THE PREFERRED EMBODIMENT

Hereinafter, preferred embodiments of the present invention will be described with reference to the accompanying drawings. In the following description, a detailed description of known functions and configurations incorporated herein will be omitted for the sake of clarity and conciseness.

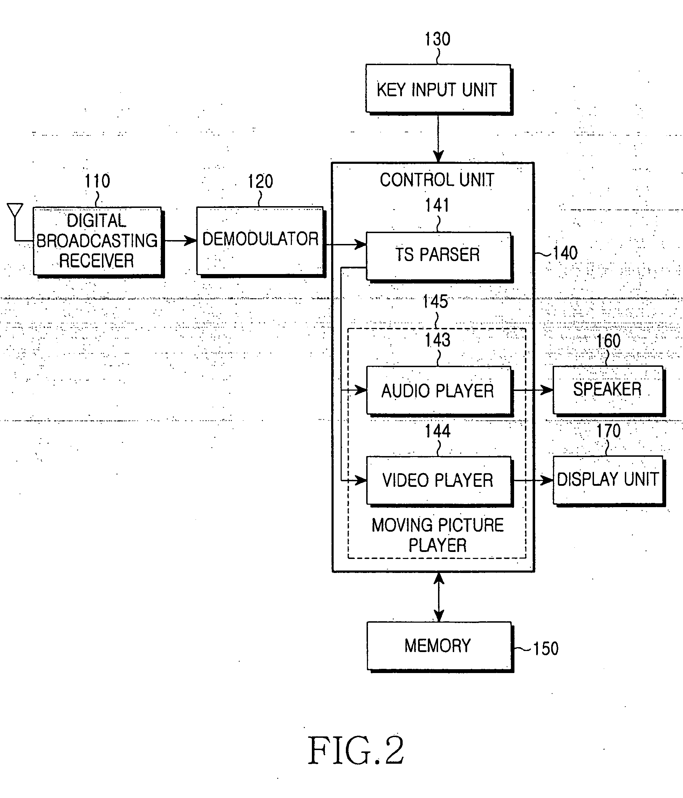

FIG. 2 is a block diagram of a mobile communication terminal according to a first embodiment of the present invention. The following description is based on the mobile communication terminal being equipped with a communication modem chip.

The mobile communication terminal includes a digital broadcasting receiver 110, a demodulator 120, a key input unit 130, a control unit 140, a memory 150, a speaker 160 and a display unit 170.

The digital broadcasting receiver 110 receives digital broadcasting data and outputs the received data to the demodulator 120. The digital broadcasting data is received in transport stream (TS) packets. In digital broadcasting, one broadcasting program includes multiple element streams (ESs) on the same temporal basis. That is, streams in the form of H.264 for image signals, AAC+ for voice signals, and for transmission of additional data are transmitted according to a time division scheme.

The TS includes 188 bytes of consecutive packets and four bytes of packet header. The structure of the TS packet is well- known in the art, so a description thereof is omitted here.

The demodulator 120 demodulates the digital broadcasting data received by the digital broadcasting receiver 110 into a digital data stream and then outputs the demodulated digital data stream to the control unit 140.

The key input unit 130 may include character keys, number keys and various function keys, and outputs a key input signal corresponding to the key input by the user to the control unit 140.

The control unit 140 controls the general operation of the mobile communication terminal according to the first embodiment of the present invention. The control unit 140 may include a TS parser 141 and a moving picture player 145. The TS parser 141 parses the digital broadcasting data in TS packets into video and audio data. The moving picture player 145 can provide a streaming service, such as a video on-demand (VOD) player. The moving picture player 145 includes an audio player 143 for decoding and outputting the audio data and a video player 144 for decoding and outputting the video data. Although not shown, the moving picture player 145 further includes a decoder for decoding the video and audio data.

The control unit 140 controls the TS parser 141 to parse the demodulated digital broadcasting data into video and audio data, while detecting CODEC information necessary for reproduction of the digital broadcasting data. When H.264 contents are used in the digital satellite broadcasting, the sequence parameter set (SPS) and picture parameter set (PPS) information located after the network adaptation layer (NAL) header of the H.264 ES is used as CODEC information. The PPS corresponds to information about a picture that includes multiple consecutive slices, and the SPS corresponds to information about a sequence that includes several consecutive pictures. Further, when AAC contents are transmitted, an audio data transport stream (ADTS) header of an ADTS, which uses an audio data format, is used as the CODEC information.

The TS parser 141 extracts decoding time stamp (DTS) information for indicating the decoding time and presentation time stamp (PTS) information for indicating digital broadcasting reproduction time from the digital broadcasting data, and then parses the video and audio data, that is, ESs. The parsed video data may be stored in either the memory 150 or a separate storage area. Thereafter, under the control of the control unit 140, the moving picture player 145 reads and reproduces the video and audio data frame by frame. The stored video data corresponds to frames including the NAL header, and the stored audio data corresponds to frames without the ADTS header.

The control unit 140 sets the detected CODEC information in the moving picture player 145. Specifically, the control unit 140 sets the H.246 video CODEC information including the SPS and PPS information in the video player 144, and sets the AAC audio CODEC information including the ADTS information in the audio player 143.

After completing the CODEC information setup for the moving picture player 145, the control unit 140 causes the moving picture player 145 to reproduce the parsed video and audio data. The reproduced video and audio data are output through the speaker 160 and the display unit 170.

The memory 150 stores various information necessary for controlling the operation of the mobile communication terminal according to the first embodiment of the present invention. Further, the memory 150 may store digital broadcasting data or digital broadcasting program guide data (EPG) received by the digital broadcasting receiver 110.

The display unit 170 preferably includes a liquid crystal display (LCD) which can sufficiently support the resolution necessary for reproduction of digital broadcasting. When the LCD includes a touch screen, the display unit 170 can serve as an input unit.

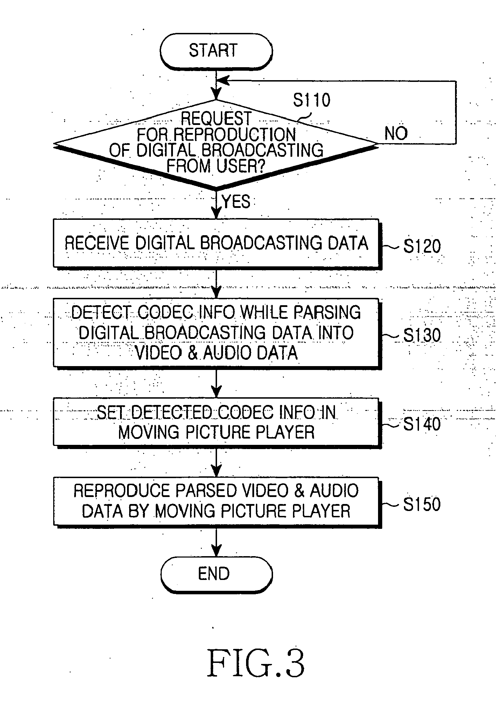

FIG. 3 is a flowchart illustrating an operation process of the mobile communication terminal according to the first embodiment of the present invention, in which the digital broadcasting is reproduced by transferring the CODEC information and the digital broadcasting data directly to a decoder without using an SDP or an RTP, which are used in the VOD protocol.

Referring to FIGs. 2 and 3, the control unit 140 determines whether there is a request from a user for reproduction of digital broadcasting (step S110). The user can request reproduction of the digital broadcasting either through a reserved key input or a key input according to a menu.

The control unit 140 receives digital broadcasting data in response to the request for reproduction of digital broadcasting (step S120). The received digital broadcasting data is demodulated into a digital data stream by the demodulator 120.

The control unit 140 causes the TS parser 141 to parse the demodulated digital broadcasting data into video and audio data, while detecting CODEC information necessary for reproduction of the digital broadcasting data (step S 130). The parsed video and audio data become an ES instead of the TS.

The control unit 140 detects the CODEC information by scanning a program map table (PMT) of the TS packet. Specifically, the control unit 140 scans the PMT and detects CODEC information in a descriptor named "DecoderSpecificinfo" within the PMT. The PMT is one of four tables constituting program specific information (PSI) data in a PSI area of the TS packet. The PMT reports the location of each stream for the service, and reports the location of a stream having a program clock reference (PCR) necessary for the service.

When the CODEC information has been detected, the control unit 140 sets the detected CODEC information in the moving picture player 145 (step S 140).

Then, the control unit 140 reproduces the parsed video and audio data through the moving picture player 145 (step S150). The reproduced video and audio data are output through the speaker 160 and the display unit 170.

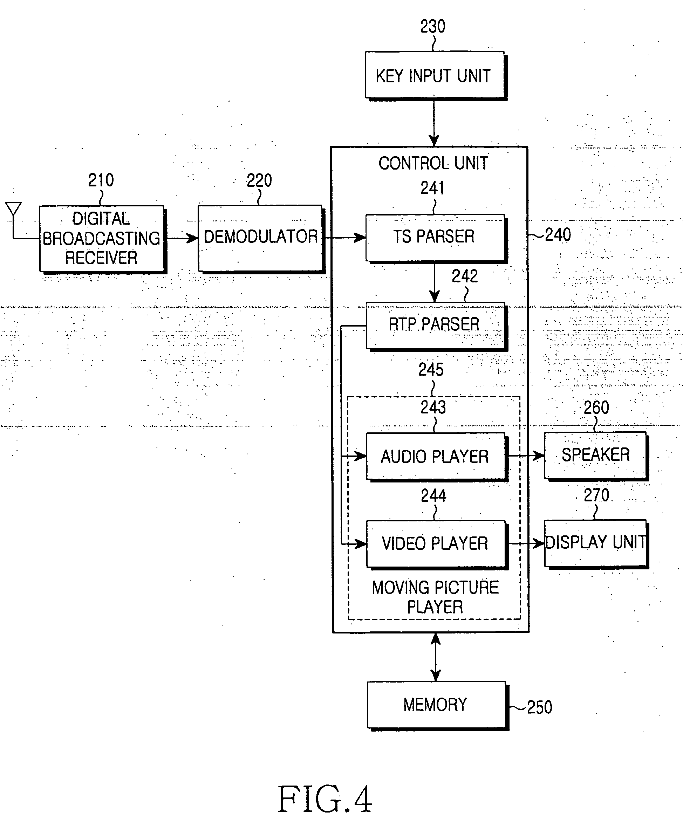

FIG. 4 is a block diagram of a mobile communication terminal according to a second embodiment of the present invention. The following description is based on the mobile communication terminal being equipped with a communication modem chip, and that the digital broadcasting is reproduced by using an SDP and an RTP.

The mobile communication terminal includes a digital broadcasting receiver 210, a demodulator 220, a key input unit 230, a control unit 240, a memory 250, a speaker 260 and a display unit 270.

The digital broadcasting receiver 210 receives digital broadcasting data and outputs the received data to the demodulator 220.

The demodulator 220 demodulates the digital broadcasting data received by the digital broadcasting receiver 210 into a digital data stream and then outputs the demodulated digital data stream to the control unit 240.

The key input unit 230 may include character keys, number keys and various function keys, and outputs a key input signal corresponding to the key input by the user to the control unit 240.

The control unit 240 controls the general operation of the mobile communication terminal according to the second embodiment of the present invention. The control unit 240 may include a TS parser 241, an RTP parser 242 and a moving picture player 245. The TS parser 241 parses the digital broadcasting data in TS packets into video and audio data. The RTP parser 242 transfers the parsed video and audio data according to an RTP scheme. The moving picture player 245 can provide a streaming service, and includes an audio player 243 and a video player 244. Further, the moving picture player 245 reproduces an SDP and an RTP which are currently used in the VOD protocol.

The control unit 240 causes the TS parser 241 to parse the demodulated digital broadcasting data into video and audio data, while detecting CODEC information necessary for reproduction of the digital broadcasting data. When H.264 contents are used in the digital satellite broadcasting, the SPS and PPS information located after the NAL header of the H.264 ES is used as the CODEC information. The PPS corresponds to information about a picture that includes multiple consecutive slices, and the SPS corresponds to information about a sequence that includes several consecutive pictures. Further, when AAC contents are transmitted, an ADTS header in an audio data format is used as the CODEC information.

The TS parser 241 extracts decoding time stamp (DTS) information indicating the decoding time and presentation time stamp (PTS) information indicating digital broadcasting reproduction time from the digital broadcasting data, and then parses the video and the audio data, i.e., the ESs. The parsed video and audio data may be stored in either the memory 250 or a separate storage area. Thereafter, under the control of the control unit 240, the moving picture player 245 reads and reproduces the video and audio data frame by frame. The stored video data corresponds to frames including the NAL header, and the stored audio data corresponds to frames without the ADTS header.

The control unit 240 sets the detected CODEC information in the moving picture player 245 according to an SDP format. The CODEC information may be stored as an SDP file in the memory 250.

The memory 250 stores various information necessary for controlling the operation of the mobile communication terminal according to the second embodiment of the present invention. Specifically, the memory 250 stores CODEC information for reproduction of the digital broadcasting data in SDP files, so as to use the SDP currently used in the VOD protocol.

Further, the memory 250 may store digital broadcasting data or digital broadcasting program guide data (EPG) received by the digital broadcasting receiver 210.

The display unit 270 preferably includes an LCD which can sufficiently support the resolution necessary for reproduction of the digital broadcasting. When the LCD includes a touch screen, the display unit 270 can serve as an input unit.

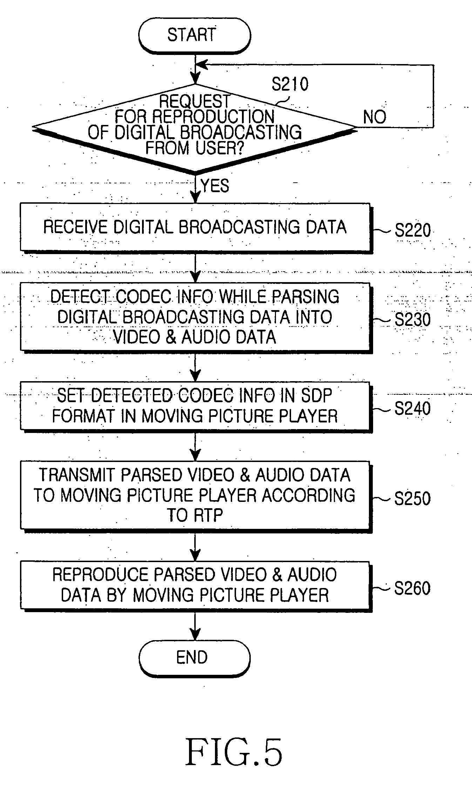

FIG. 5 is a flowchart for illustrating an operation process of the mobile communication terminal according to the second embodiment of the present invention, in which the digital broadcasting is reproduced by using an SDP and an RTP which are currently used in the VOD protocol.

Referring to FIGs. 4 and 5, the control unit 240 determines whether there is a request from a user for reproduction of digital broadcasting (step S210).

The control unit 240 receives digital broadcasting data in response to the request for reproduction of the digital broadcasting (step S220). When the digital broadcasting data is stored in the memory 250, the control unit 240 may read the stored digital broadcasting data.

The control unit 240 causes the TS parser 241 to parse the demodulated digital broadcasting data into video and audio data, while detecting CODEC information (step S230). The CODEC information includes video and audio CODEC information necessary for reproduction of the digital broadcasting data.

The control unit 240 converts the detected CODEC information into SDP formatted information, and then sets the converted CODEC information in the moving picture player 245 (step S240). At this time, the control unit 240 may store the CODEC information as an SDP file in the memory 250. Then, the control unit 240 can immediately set the SDP file into the moving picture player 245 without a separate detection of the CODEC information when it reproduces the digital broadcasting.

The control unit 240 causes the RTP parser 242 to transmit the parsed video and audio data to the moving picture player 245 (step S250). The RTP parser 242 transfers the video and audio data to the moving picture player 245 according to an RTP scheme. That is, the RTP parser 242 transfers the video and audio data to the moving picture player 245 by using a protocol of the moving picture player 245 having a real-time streaming function. The RTP is well- known in the art, so a detailed description thereof will be omitted here.

The control unit 240 controls the moving picture player 245, in which the CODEC information has been set, to reproduce the video and audio data transferred to the RTP parser 242 (step S260). The moving picture player 245 decodes the video and audio data based on the setup CODEC information, and then reproduces the decoded video and audio data through the speaker 260 and the display unit 270.

According to the present invention, a mobile communication terminal can reproduce digital broadcasting without a separate multimedia chip for reproduction of digital broadcasting. Therefore, the present invention can reduce the power consumption in a mobile communication terminal.

Further, the present invention provides a mobile communication terminal which can reproduce digital broadcasting by using a moving picture player mounted therein. Therefore, it is unnecessary for a user to purchase a dedicated terminal for reproduction and viewing of digital broadcasting.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for reproducing digital broadcasting by a mobile communication terminal equipped with a moving picture player, the method comprising the steps of:
receiving digital broadcasting data;
detecting coder/decoder (CODEC) information necessary for reproduction of the digital broadcasting, while parsing the received digital broadcasting data into video and audio data;
setting the detected CODEC information in the moving picture player; and
reproducing the video and the audio data by the moving picture player in which the CODEC information has been set.

2. The method as claimed in claim 1, wherein the CODEC information includes sequence parameter set (SPS) information, picture parameter set (PPS) information, and audio data transport stream (ADTS) information, wherein the SPS information and the PPS information are video CODEC information and the ADTS information is audio CODEC information.

3. A method for reproducing digital broadcasting by a mobile communication terminal equipped with a moving picture player, the method comprising the steps of:
(1) receiving digital broadcasting data in response to a request for reproduction of the digital broadcasting;
(2) detecting coder/decoder (CODEC) information necessary for reproduction of the digital broadcasting, while parsing the received digital broadcasting data into video and audio data;
(3) converting the detected CODEC information into information in a session description protocol (SDP) format and setting the converted information in the moving picture player; and
(4) reproducing the parsed video and audio data by the moving picture player in which the CODEC information has been set.

4. The method as claimed in claim 3, wherein the CODEC information includes sequence parameter set (SPS) information, picture parameter set (PPS) information, and audio data transport stream (ADTS) information, wherein the SPS information and the PPS information are video CODEC information and the ADTS information is audio CODEC information.

5. The method as claimed in claim 3, wherein step (4) further comprises transmitting the video and audio data to the moving picture player according to a real-time protocol scheme.

6. The method as claimed in claim 3, further comprising storing the CODEC information converted into the SDP format in a memory.

7. The method as claimed in claim 6, wherein, in step (3), the CODEC information of the SDP format stored in the memory is read and set in the moving picture player when there is a request for reproduction of the digital broadcasting.

8. A mobile communication terminal equipped with a moving picture player, the mobile communication terminal comprising:
a digital broadcasting receiver for receiving digital broadcasting data;
a demodulator for demodulating the received digital broadcasting data;
a control unit which detects coder/decoder (CODEC) information necessary for reproduction of the digital broadcasting, while parsing the demodulated digital broadcasting data into video and audio data, sets the detected CODEC information in the moving picture player, and controls the moving picture player to reproduce the video and audio data.

9. The mobile communication terminal as claimed in claim 8, wherein the CODEC information includes sequence parameter set (SPS) information, picture parameter set (PPS) information, and audio data transport stream (ADTS) information, wherein the SPS information and the PPS information are video CODEC information and the ADTS information is audio CODEC information.

10. The mobile communication terminal as claimed in claim 8, wherein the control unit includes the moving picture player.

11. The mobile communication terminal as claimed in claim 10, wherein the control unit further includes a transport stream (TS) parser for detecting the CODEC information while parsing the demodulated digital broadcasting data into video and audio data.

12. A mobile communication terminal equipped with a moving picture player, the mobile communication terminal comprising:
a digital broadcasting receiver for receiving digital broadcasting data;
a demodulator for demodulating the received digital broadcasting data;
a control unit which detects coder/decoder (CODEC) information necessary for reproduction of the digital broadcasting while parsing the demodulated digital broadcasting data into video and audio data, converts the CODEC information into information of a session description protocol (SDP)-format, sets the converted information in the moving picture player, and controls the moving picture player to reproduce the video and audio data; and
a real-time protocol (RTP) parser for transmitting the video and audio data to the moving picture player according to a real-time protocol scheme.

13. The mobile communication terminal as claimed in claim 12, wherein the CODEC information includes sequence parameter set (SPS) information, picture parameter set (PPS) information, and audio data transport stream (ADTS) information, wherein the SPS information and the PPS information are video CODEC information and the ADTS information is audio CODEC information.

14. The mobile communication terminal as claimed in claim 13, wherein the control unit includes the RTP parser.

15. The mobile communication terminal as claimed in claim 12, further comprising a memory for storing the CODEC information in the SDP format.

16. The mobile communication terminal as claimed in claim 15, wherein the control unit reads the CODEC information stored in the memory and then sets the read CODEC information in the moving picture player, when there is a request for reproduction of the digital broadcasting.

17. The mobile communication terminal as claimed in claim 12, wherein the control unit includes the moving picture player.
